# FASCICULE DE BREVET EUROPEEN

(11) **EP 2 522 262 B1**
(45) Date de publication et mention de la délivrance du brevet: **25.06.2014**
(21) Numéro de dépôt: 12166598.8
(22) Date de dépôt: 03.05.2012
(51) Int. Cl.: A47J 43/07

(54) **Outil de mixage pour récipient de travail d'appareil électroménager de préparation culinaire**
Mixinstrument für Arbeitsbehälter eines Elektrohaushaltsgerätes zur Speisenzubereitung
Mixing tool for working container of a household cooking appliance

(30) Priorité: 13.05.2011 FR 1154191
(43) Date de publication de la demande: 14.11.2012
(73) Titulaire: SEB S.A., 69130 Écully (FR)
(72) Inventeur: DOYEN, Nadine, 53100 Mayenne (FR); LEMERCIER, Michel, 53250 Javron-les-Chapelles (FR)
(74) Mandataire: Bourrières, Patrice

(56) Documents cités:
- EP-A1- 2 070 450
- JP-A- 1 221 121
- US-A1- 2009 260 236

## Description

La présente invention se rapporte au domaine technique général des appareils électroménagers de préparation culinaire comprenant un récipient de travail comportant un fond équipé d'un outil de mixage et se rapporte plus particulièrement à un outil de mixage comportant un arbre d'entrainement supportant six lames réparties selon une paire de lames supérieures pliées vers le haut, une paire de lames inférieures pliées vers le bas et une paire de lames intermédiaires situées entre les lames inférieures et les lames supérieures.

Il est connu, de la demande de brevet US 2009/0260236, un outil de mixage comprenant un arbre d'entrainement supportant six lames réparties selon une paire de lames supérieures, une paire de lames inférieures et une paire de lames intermédiaires située entre les paires de lames supérieures et inférieures, les paires de lames supérieures et inférieures comportant un bord d'attaque tranchant lisse et la paire de lames intermédiaires comportant un bord d'attaque dentelé. Un tel outil présente l'avantage de comporter des lames munies d'un bord tranchant lisse permettant d'obtenir une bonne finesse des aliments mixés et des lames munies d'un bord d'attaque dentelé permettant de broyer des ingrédients durs tels que des fruits congelés.

Cependant, un tel outil de mixage présente l'inconvénient de ne pas être très efficace pour concasser des glaçons lorsque ces derniers sont disposés en grandes quantités dans le récipient, les glaçons ayant tendance à rester en hauteur dans le récipient, dans la partie balayée par la paire de lames supérieures démunies de bord dentelé. De plus, dans un tel outil de mixage, les lames d'une même paire présentent une même inclinaison par rapport à l'axe de rotation de l'outil de sorte qu'elles balayent la même zone lors de la rotation de l'outil de mixage au détriment de la performance de l'outil.

Aussi, un but de la présente invention est de proposer un outil de mixage pour appareil électroménager remédiant à ces inconvénients et possédant une très grande efficacité pour broyer les ingrédients durs, tels que des glaçons, et mixer des ingrédients plus tendres, en permettant l'obtention d'une grande finesse. Un autre but de la présente invention de proposer un outil de mixage présentant un bon équilibrage pour limiter les efforts sur le palier de guidage.

A cet effet, l'invention se rapporte à un outil de mixage pour récipient de travail d'appareil électroménager de préparation culinaire comportant un arbre d'entrainement supportant un couteau comprenant six lames réparties selon une paire de lames supérieures pliées vers le haut, une paire de lames inférieures pliées vers le bas et une paire de lames intermédiaires situées entre les lames inférieures et les lames supérieures, les lames inférieures comportant un bord d'attaque lisse et tranchant, **caractérisé en ce que** les lames supérieures comportent un bord d'attaque dentelé et en ce que l'une des lames intermédiaires comporte un bord d'attaque tranchant lisse, l'autre lame intermédiaire comportant un bord d'attaque dentelé.

Selon une autre caractéristique de l'invention, la lame intermédiaire munie du bord d'attaque dentelé s'étend en dessous du niveau de la lame intermédiaire munie du bord d'attaque tranchant lisse.

Ainsi, la lame intermédiaire possédant le bord d'attaque tranchant lisse est plus proche des lames supérieures dentelées que la lame intermédiaire munie du bord d'attaque dentelé, de sorte qu'il y a, de haut en bas, une alternance de lames dentelées et de lames lisses pour une plus grande efficacité.

Selon une autre caractéristique de l'invention, les lames intermédiaires s'étendent depuis une platine centrale orientée perpendiculairement à l'arbre d'entrainement, l'une des lames intermédiaires étant pliée vers le haut par rapport à la platine centrale, l'autre lame intermédiaire s'étendant dans le plan de la platine centrale ou étant pliée vers le bas.

Selon encore une autre caractéristique de l'invention, l'une des lames intermédiaires est sensiblement plane et forme un angle de l'ordre de 20° par rapport à la platine centrale, l'autre lame intermédiaire s'étendant dans le plan de la platine centrale.

Selon une autre caractéristique de l'invention, les six lames sont portées par une même platine centrale qui est fixée à une extrémité supérieure de l'arbre d'entrainement.

Selon une autre caractéristique de l'invention, les six lames sont obtenues par découpage d'une tôle d'acier inox, l'inclinaison des lames par rapport à la platine centrale étant ensuite obtenue par une opération de pliage.

Selon une autre caractéristique de l'invention, les paires de lames inférieures, intermédiaires et supérieures sont disposées à 60° les unes des autres.

L'invention concerne également un appareil électroménager de préparation culinaire, de type mélangeur, comportant un récipient de travail comprenant un fond équipé d'un outil de mixage, l'outil de mixage comportant un couteau fixé à l'extrémité d'un arbre d'entrainement traversant le fond du récipient de travail, dans lequel l'outil de mixage est tel que précédemment décrit.

Selon une autre caractéristique de l'invention, le fond du récipient de travail présente une forme conique.

On comprendra mieux les buts, aspects et avantages de la présente invention, d'après la description donnée ci-après de plusieurs modes particuliers de réalisation de l'invention présentés à titre d'exemples non limitatifs, en se référant aux dessins annexés dans lesquels :
- la figure 1 est une vue en perspective, en coupe partielle, d'un récipient de travail comprenant un outil de mixage selon un premier mode de réalisation de l'invention ;
- la figure 2 est une vue en perspective de l'outil de mixage du récipient de travail de la figure 1,
- la figure 3 est une vue de dessus de l'outil de mixage de la figure 2 ;
- les figures 4A, 4B et 4C sont différentes vues de côté du couteau équipant l'outil de mixage la figure 2 ;
- la figure 5 est une vue de dessus d'un couteau d'un outil de mixage selon un second mode de réalisation de l'invention ;
- la figure 5A est une vue de côté du couteau de la figure 5 ;
- la figure 6 est une vue de dessus d'un couteau d'un outil de mixage selon un troisième mode de réalisation de l'invention ;
- les figures 6A et 6b sont des vues de côté du couteau de la figure 6.

Seuls les éléments nécessaires à la compréhension de l'invention ont été représentés. Pour faciliter la lecture des dessins, les mêmes éléments portent les mêmes références d'une figure à l'autre.

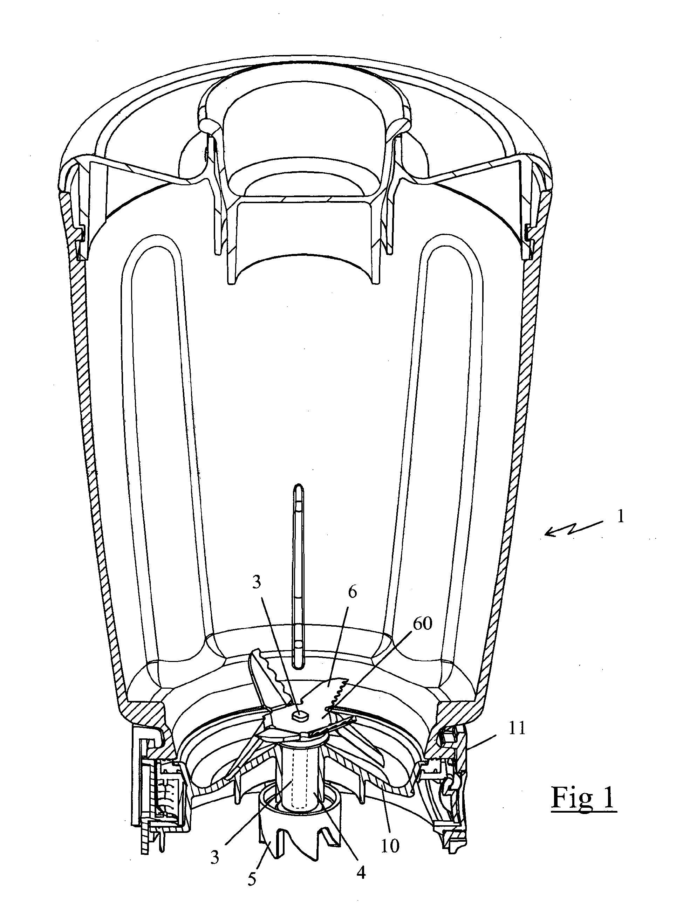

La figure 1 représente un récipient de travail 1 d'appareil électroménager de préparation culinaire, de type mélangeur, comprenant un fond 10 recevant un outil de mixage 2 comportant un arbre d'entrainement 3 pouvant tourner librement dans un palier de guidage 4 traversant le fond 10 du récipient de travail 1, l'arbre d'entrainement 3 comprenant une extrémité inférieure munie d'une bague d'accouplement 5 destinée à s'accoupler avec un entraineur de forme complémentaire porté par un boitier moteur, non représenté sur les figures, assurant l'entrainement en rotation de l'outil de mixage 2 à une vitesse de l'ordre de 20 000 tr/min.

De manière avantageuse, le récipient de travail 1 comporte une embase 11 amovible comprenant une partie centrale conique formant le fond 10 du récipient de travail 1, l'extrémité supérieure de l'arbre d'entrainement 3 traversant le fond 10 en son centre et supportant un couteau 6 comprenant un platine centrale 60 hexagonale s'étendant perpendiculairement à l'arbre d'entrainement 3.

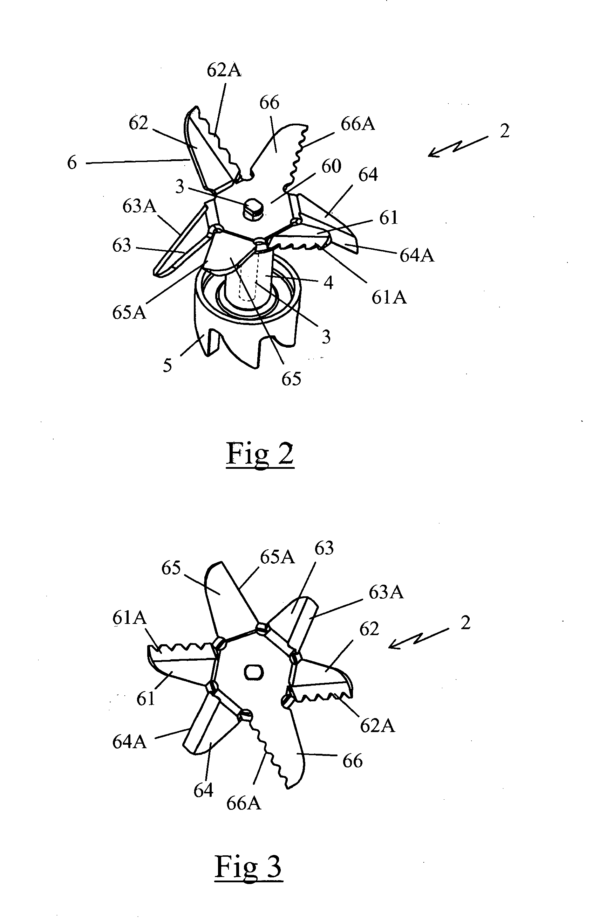

Conformément aux figures 2 et 3, la platine centrale 60 supporte six lames 61, 62, 63, 64, 65, 66 associées selon trois paires disposées à 60° les unes des autres, en vue de dessus, les lames du couteau 6 s'étendant depuis la platine centrale 60 sur une longueur de l'ordre de 20 mm, la platine centrale 60 présentant une largeur de l'ordre de 18 mm entre deux lames d'une même paire.

Plus particulièrement selon l'invention, le couteau 6 comporte une paire de lames supérieures 61, 62 comprenant un bord d'attaque 61A, 62A dentelé, une paire de lames inférieures 63, 64 comprenant un bord d'attaque 63A, 64A tranchant lisse, et une paire de lames intermédiaires 65, 66 comprenant une première lame intermédiaire 65 munie d'un bord d'attaque 65A tranchant lisse et une seconde lame intermédiaire 66 munie d'un bord d'attaque 66A dentelé.

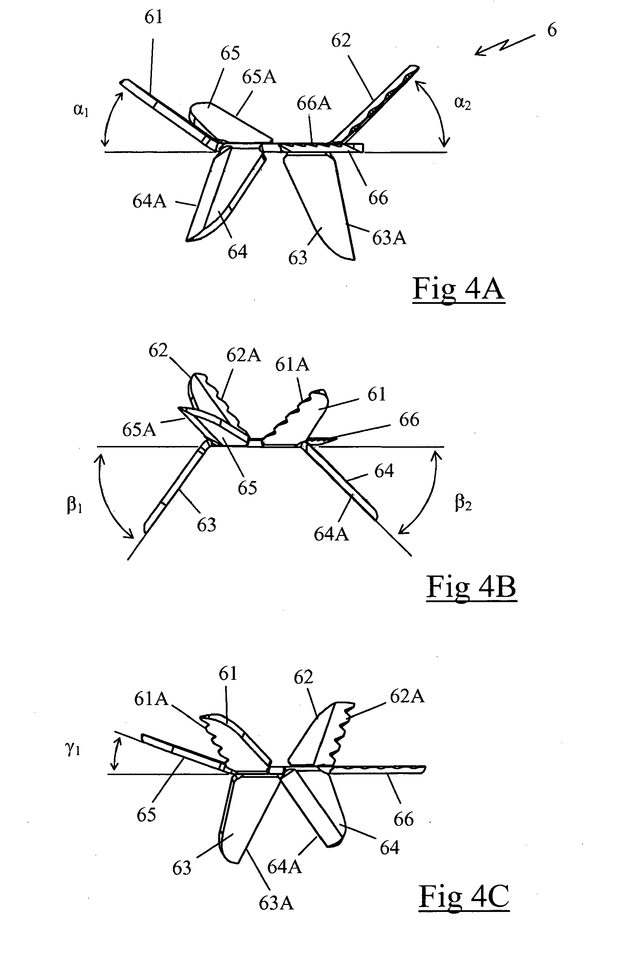

Comme on peut le voir sur la figure 4A, la paire de lames supérieures 61, 62 comprend une première lame supérieure 61 sensiblement plane, pliée vers le haut par rapport à la platine centrale 60 de manière à former un angle α₁ de l'ordre 45° avec cette dernière et une seconde lame supérieure 62 également plane pliée vers le haut par rapport à la platine centrale 60 de manière à former un angle α₂ de l'ordre de 55° avec cette dernière.

Comme on peut le voir sur la figure 4B, la paire de lames inférieures 63, 64 comprend une première lame inférieure 63 sensiblement plane, pliée vers le bas par rapport à la platine centrale 60 de manière à former avec cette dernière un angle β₁ de l'ordre de 55° et une seconde lame inférieure 64, également plane, pliée vers le bas par rapport à la platine centrale 60 de manière à former un angle β₂ de l'ordre de 45° avec cette dernière.

Comme on peut le voir sur la figure 4C, la première lame intermédiaire 65, munie du bord d'attaque 65A tranchant lisse, est sensiblement plane et est pliée vers le haut par rapport à la platine centrale 60 de manière à former avec cette dernière un angle γ₁ de l'ordre de 20°, la seconde lame intermédiaire 66 munie du bord d'attaque 66A dentelé étant également sensiblement plane et s'étendant dans le plan de la platine centrale 60.

Le couteau 6 ainsi défini peut être facilement réalisé en effectuant une première phase de découpage des lames autour de la platine centrale dans une tôle d'acier inox d'une épaisseur de 1,5 mm, puis en réalisant un affutage des bords d'attaque à 30° en effectuant une rectification d'un seul côté de la lame, l'inclinaison des lames par rapport à la platine centrale étant ensuite obtenue par une opération de pliage.

L'outil de mixage 2 ainsi obtenu présente donc l'avantage d'être simple à réaliser et comporte un couteau comprenant une paire de lames supérieures 61, 62 dentelées assurant efficacement le broyage d'élément durs, tel que des glaçons, un paire de lames intermédiaires 65, 66 comprenant une lame dentelée pour broyer les ingrédients durs et une lame aiguisée pour mixer finement les ingrédients mous, les lames inférieures 63, 64 étant simplement aiguisées pour assurer l'homogénéité de la préparation par un mouvement cyclique.

En particulier, la combinaison de six lames 61, 62, 63, 64, 65, 66 avec six angles de pliage différents présente l'avantage d'assurer un mixage optimisé des ingrédients, chacune des lames balayant une zone de travail distincte des autres lames.

De plus, le pliage des lames 61, 62, 63, 64, 65, 66 selon les angles indiqués, à ± 2° près, présente l'avantage d'assurer un bon équilibrage dynamique de l'outil de mixage 2 de sorte que les efforts transmis au palier 4 sont limités même lorsque le couteau 6 est entrainé à 20 000 tr/min.

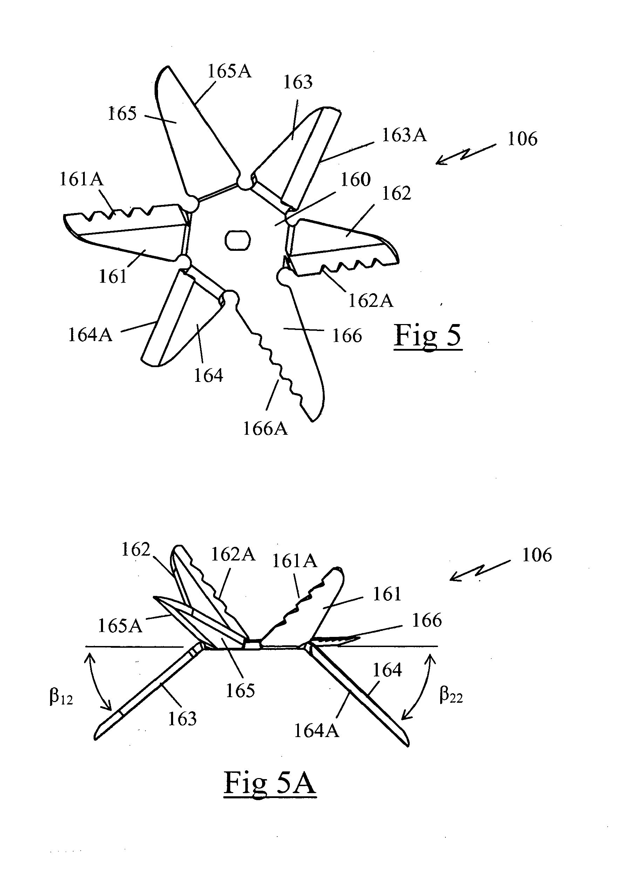

Les figures 5 et 5A illustrent un couteau 106 selon un deuxième mode de réalisation de l'invention, ce couteau 106 étant destiné à être monté sur l'extrémité supérieure de l'arbre d'entrainement 3 décrit aux figures 1 à 3, à la place du couteau 6.

Conformément à ces figures, le couteau 106 comporte, tout comme dans le premier mode de réalisation, une paire de lames supérieures 161, 162, une paire de lames inférieures 163, 164 et une paire de lames intermédiaires 165, 166, le couteau 106 se différenciant toutefois du couteau 6 décrit au premier mode de réalisation par une envergure plus importante, chaque lame du couteau 106 s'étendant depuis la platine 160 sur une longueur de l'ordre de 25 mm, et par le fait que la première lame inférieure 163 est pliée vers le bas par rapport à la platine de manière à former avec cette dernière un angle P12 de l'ordre de 35°, la seconde lame inférieure 164 restant pliée vers le bas par rapport à la platine avec un angle β₂₂ de l'ordre de 45°.

Les angles de pliage des lames supérieures 161, 162 et des lames intermédiaires 165, 166 restent quant à eux inchangés par rapport aux angles de pliage des lames supérieures 61, 62 et des lames intermédiaires 65, 66 du couteau 6.

L'outil de mixage équipé du couteau selon une telle variante de réalisation présente l'avantage d'avoir une paire de lames inférieures moins inclinée vers le fond du récipient de travail de sorte que le couteau peut être disposé plus bas dans le récipient de travail et/ou être utilisé avec un fond de récipient de travail plus plat.

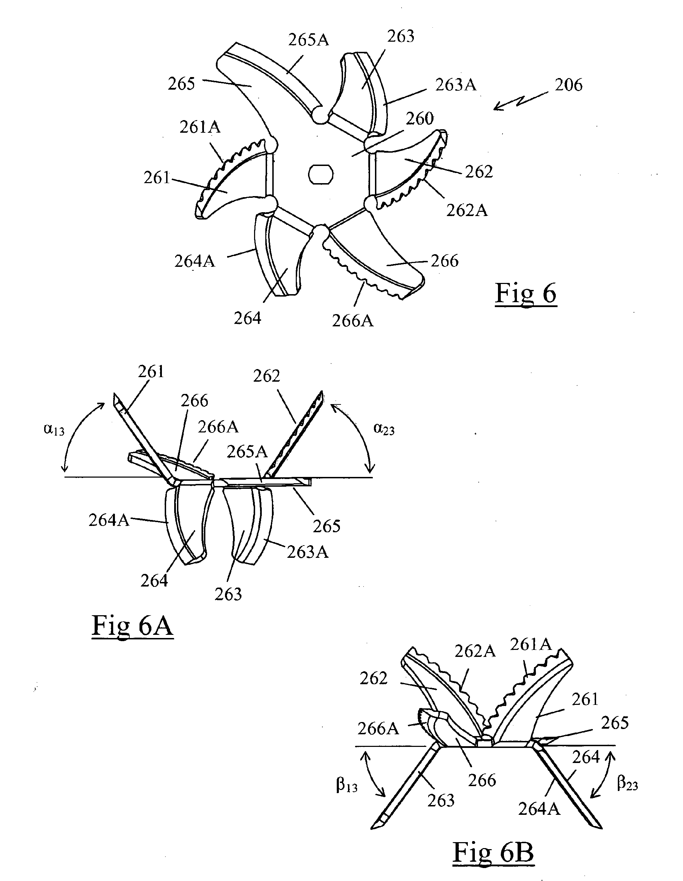

Les figures 6, 6A et 6B illustrent un couteau 206 selon un troisième mode de réalisation de l'invention, ce couteau 206 étant destiné à être monté à la place du couteau 6, sur l'extrémité supérieure de l'arbre d'entrainement 3 de l'outil de mixage 2 décrit aux figures 1 à 3.

Conformément à ces figures, le couteau 206 selon cette variante de réalisation se différencie du premier mode de réalisation en ce que les lames présentent un bord d'attaque et un bord de fuite courbes, et en ce que les angles α₁₃,α₂₃ de pliages vers le haut des lames supérieures 261, 262 sont de l'ordre de 55° et les angles β₁₃, β₂₃ de pliage vers le bas des lames inférieures 263, 264 sont de l'ordre de 55°. Le couteau 206 se différencie également du premier mode de réalisation en ce qu'il comporte une paire de lames intermédiaires 265, 266 comprenant une première lame intermédiaire 265, munie d'un bord d'attaque 265A tranchant lisse, s'étendant dans le plan de la platine centrale 260 et une seconde lame intermédiaire 266, munie d'un bord d'attaque dentelé 266A, qui est pliée vers le haut de manière à former un angle de l'ordre de 20° par rapport à la platine centrale 260.

L'outil selon cette variante de réalisation peut être facilement réalisé en effectuant une première phase de découpage en étoile d'une ébauche des lames dans une tôle d'acier inox d'une épaisseur de 1,5 mm, suivie d'un emboutissage à plat des lames pour obtenir la forme courbe des lames, l'affutage des bords d'attaque étant ensuite réalisé en effectuant une rectification d'un côté de la lame, l'inclinaison des lames étant finalement obtenue, dans une dernière étape du procédé de fabrication, par une opération de pliage.

Un couteau selon un tel mode de réalisation présente l'avantage d'être à la fois performant et esthétique, les angles de pliage ainsi réalisé permettant d'obtenir un bon compromis entre équilibrage dynamique et mixage des ingrédients.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Ainsi, les angles d'inclinaison des lames pourront être différents et être notamment adaptés en fonction de la forme du fond du récipient.

## Revendications

1. Outil de mixage (2) pour récipient de travail (1) d'appareil électroménager de préparation culinaire comportant un arbre d'entrainement (3) supportant un couteau (6 ; 106) comprenant six lames réparties selon une paire de lames supérieures (61, 62 ; 161, 162 ; 261 ; 262) pliées vers le haut, une paire de lames inférieures (63, 64 ; 163, 164 ; 263 ; 264) pliées vers le bas, et une paire de lames intermédiaires (65, 66 ; 165, 166 ; 265 ; 266) situées entre les lames inférieures (63, 64 ; 163, 164 ; 263 ; 264) et les lames supérieures (61, 62 ; 161, 162 ; 261 ; 262), les lames inférieures (63, 64 ; 163, 164 ; 263 ; 264) comportant un bord d'attaque (63A, 64A ; 163A, 164A ; 263A ; 264A) lisse et tranchant, **caractérisé en ce que** les lames supérieures (61, 62 ; 161, 162 ; 261 ; 262) comportent un bord d'attaque (61A, 62A; 161A, 162A; 261A; 262A) dentelé et **en ce que** l'une des lames intermédiaires (65, 66 ; 165, 166 ; 265 ; 266) comporte un bord d'attaque (65A ; 165A; 265A) tranchant lisse, l'autre lame intermédiaire comportant un bord d'attaque (66A ; 166A ; 266A) dentelé.

2. Outil de mixage selon la revendication 1, **caractérisé en ce que** la lame intermédiaire (66 ; 166) munie du bord d'attaque (66A ; 166A) dentelé s'étend en dessous du niveau de la lame intermédiaire (65 ; 165) munie du bord d'attaque (65A ; 165A) tranchant lisse.

3. Outil de mixage selon l'une quelconque des revendications 1 à 2, **caractérisé en ce que** les lames intermédiaires (65, 66 ; 165, 166 ; 265 ; 266) s'étendent depuis une platine centrale (60 ; 160 ; 260) orientée perpendiculairement à l'arbre d'entrainement (3) et **en ce que** l'une des lames intermédiaires (65 ; 165 ; 266) est pliée vers le haut par rapport à la platine centrale (60 ; 160 ; 260), l'autre lame intermédiaire (66 ; 166 ; 265) s'étendant dans le plan de la platine centrale (60 ; 160 ; 260) ou étant pliée vers le bas.

4. Outil de mixage selon la revendication 3, **caractérisé en ce que** l'une des lames intermédiaires (65 ; 165, 266) est sensiblement plane et forme un angle de l'ordre de 20° par rapport à la platine centrale (60 ; 160 ; 260), l'autre lame intermédiaire (66 ; 166 ; 265) s'étendant dans le plan de la platine centrale (60 ; 160 ; 260).

5. Outil de mixage selon l'une quelconque des revendications 1 à 4, **caractérisé en ce que** les six lames (61, 62, 63, 64, 65, 66) sont portées par une même platine centrale (60) qui est fixée à une extrémité supérieure de l'arbre d'entrainement (3).

6. Outil de mixage selon la revendication 5, **caractérisé en ce que** les six lames (61, 62, 63, 64, 65, 66) sont obtenues par découpage d'une tôle d'acier inox, l'inclinaison des lames (61, 62, 63, 64, 65) par rapport à la platine centrale (60) étant ensuite obtenue par une opération de pliage.

7. Outil de mixage selon l'une quelconque des revendications 1 à 6, **caractérisé en ce que** les paires de lames inférieures, intermédiaires et supérieures sont disposées à 60° les unes des autres.

8. Appareil électroménager de préparation culinaire, de type mélangeur, comportant un récipient de travail (1) comprenant un fond (10) équipé d'un outil de mixage (2), ledit outil de mixage (2), comportant un couteau (6 ; 106) fixé à l'extrémité d'un arbre d'entrainement (3) traversant le fond (10) du récipient de travail (1), **caractérisé en ce que** ledit outil de mixage (2) est conforme à l'une des revendications 1 à 7.

9. Appareil électroménager de préparation culinaire selon la revendication 8, **caractérisé en ce que** le fond (10) présente une forme conique.

## Patentansprüche

1. Mixwerkzeug (2) für den Arbeitsbehälter (1) eines Elektrohaushaltsgeräts zur Nahrungsmittelzubereitung mit einer Antriebswelle (3), die ein Messer (6; 106) trägt, das sechs Klingen umfasst, die aufgeteilt sind in ein oberes, nach oben abgewinkeltes Klingenpaar (61, 62; 161, 162; 261; 262), ein unteres, nach unten abgewinkeltes Klingenpaar (63, 64; 163, 164; 263; 264) und ein zwischen den unteren Klingen (63, 64; 163, 164; 263; 264) und den oberen Klingen (61, 62; 161, 162; 261; 262) angeordnetes zwischenliegendes Klingenpaar (65, 66; 165, 166; 265; 266), wobei die unteren Klingen (63, 64; 163, 164; 263; 264) eine glatte und scharfe Vorderkante (63A, 64A; 163A, 164A; 263A; 264A) aufweisen, **dadurch gekennzeichnet, dass** die oberen Klingen (61, 62; 161, 162; 261; 262) mit einer gezackten Vorderkante (61 A, 62A; 161 A, 162A; 261 A; 262A) versehen sind und dass eine der zwischenliegenden Klingen (65, 66; 165, 166; 265; 266) eine glatte, scharfe Vorderkante (65A; 165A; 265A) aufweist, während die andere zwischenliegende Klinge mit einer gezackten Vorderkante (66A; 166A; 266A) versehen ist.

2. Mixwerkzeug nach Anspruch 1, **dadurch gekennzeichnet, dass** die mit der gezackten Vorderkante (66A; 166A) versehene zwischenliegende Klinge (66; 166) unter der Ebene der mit der glatten, scharfen Vorderkante (65A; 165A) versehenen zwischenliegenden Klinge (65; 165) liegt.

3. Mixwerkzeug nach einem der Ansprüche 1 bis 2, **dadurch gekennzeichnet, dass** sich die zwischenliegenden Klingen (65, 66; 165, 166; 265; 266) ausgehend von einer zentralen Platte (60; 160; 260) erstrecken, die senkrecht zur Antriebswelle (3) ausgerichtet ist, und dass eine der zwischenliegenden Klingen (65; 165; 266) zur zentralen Platte (60; 160; 260) nach oben abgewinkelt ist, während sich die andere zwischenliegende Klinge (66; 166; 265) in der Ebene der zentralen Platte (60; 160; 260) erstreckt oder nach unten abgewinkelt ist.

4. Mixwerkzeug nach Anspruch 3, **dadurch gekennzeichnet, dass** eine der zwischenliegenden Klingen (65; 165, 266) im Wesentlichen eben ist und in einem Winkel von ca. 20° zur zentralen Platte (60; 160; 260) abgewinkelt ist, während sich die andere zwischenliegende Klinge (66; 166; 265) in der Ebene der zentralen Platte (60; 160; 260) erstreckt.

5. Mixwerkzeug nach einem der Ansprüche 1 bis 4, **dadurch gekennzeichnet, dass** die sechs Klingen (61, 62, 63, 64, 65, 66) von derselben zentralen Platte (60) getragen werden, die am oberen Ende der Antriebswelle (3) befestigt ist.

6. Mixwerkzeug nach Anspruch 5, **dadurch gekennzeichnet, dass** die sechs Klingen (61, 62, 63, 64, 65, 66) durch das Zuschneiden eines Edelstahlblechs hergestellt werden, wobei die Neigung der Klingen (61, 62, 63, 64, 65) zur zentralen Platte (60) durch einen anschließenden Falzvorgang erzielt wird.

7. Mixwerkzeug nach einem der Ansprüche 1 bis 6, **dadurch gekennzeichnet, dass** die unteren, die zwischenliegenden und die oberen Klingenpaare in einem Winkel von 60° zueinander angeordnet sind.

8. Elektrohaushaltsgerät für kulinarische Zubereitungen zum Rühren mit einem Arbeitsbehälter (1), der einen mit einem Mixwerkzeug (2) versehenen Boden (10) umfasst, wobei das genannte Mixwerkzeug (2) mit einem Messer (6; 106) versehen ist, das am Ende einer Antriebswelle (3) befestigt ist, welche den Boden (10) des Arbeitsbehälters (1) durchdringt, **dadurch gekennzeichnet, dass** das genannte Mixwerkzeug (2) einem der Ansprüche 1 bis 7 entspricht.

9. Elektrohaushaltsgerät zur Nahrungsmittelzubereitung nach Anspruch 8, **dadurch gekennzeichnet, dass** der Boden (10) eine Kegelform aufweist.

## Claims

1. Mixing tool (2) for working receptacle (1) of food preparation household electrical appliance comprising a drive shaft (3) carrying a knife (6; 106) comprising six blades, with one pair of upper blades (61, 62; 161, 162; 261, 262) folded upwards, one pair of lower blades (63, 64; 163, 164; 263; 264) folded downwards, and one pair of intermediate blades (65, 66; 165, 166; 265; 266) located between the lower blades (63, 64; 163, 164; 263; 264) and the upper blades (61, 62; 161, 162; 261, 262), the lower blades (63, 64; 163, 164; 263; 264) having a smooth sharp leading edge (63A, 64A; 163A, 164A; 263A; 264A), **characterised in that** the upper blades (61, 62; 161, 162; 261, 262) comprise a serrated leading edge (61 A, 62A; 161A, 162A; 261A; 262A) and **in that** one of the intermediate blades (65, 66; 165, 166; 265; 266) comprises a smooth sharp leading edge (65A; 165A; 265A), the other intermediate blade having a serrated leading edge (66A; 166A; 266A).

2. Mixing tool according to claim 1, **characterised in that** the intermediate blade (66; 166) with the serrated leading edge (66A; 166A) extends below the level of the intermediate blade (65; 165) with the smooth sharp leading edge (65A; 165A).

3. Mixing tool according to claim 1 or to 2, **characterised in that** the intermediate blades (65, 66; 165, 166; 265; 266) extend from a central plate (60; 160; 260) directed perpendicular to the drive shaft (3) and **in that** one of the intermediate blades (65; 165; 266) is folded upwards with respect to the central plate (60; 160; 260), the other intermediate blade (66; 166; 265) extending in the plane of the central plate (60; 160; 260) or being folded downwards.

4. Mixing tool according to claim 3, **characterised in that** one of the intermediate blades (65; 165, 266) is substantially flat and forms an angle of about 20° with respect to the central plate (60; 160; 260), the other intermediate blade (66; 166; 265) extending in the plane of the central plate (60; 160; 260).

5. Mixing tool according to one of claims 1 to 4, **characterised in that** the six blades (61, 62, 63, 64, 65, 66) are carried by the same central plate (60) which is fixed to an upper end of the drive shaft (3).

6. Mixing tool according to claim 5, **characterised in that** the six blades (61, 62, 63, 64, 65, 66) are obtained by cutting a stainless steel plate, the inclination of the blades (61, 62 , 63, 64, 65) with respect to the central plate (60) then being obtained by a folding operation

7. Mixing tool according to one of claims 1 to 6, **characterised in that** the pairs of lower, intermediate and upper blades are arranged at 60° to each other.

8. Food preparation household electrical appliance, of mixer type, having a working receptacle (1) comprising a base (10) equipped with a mixing tool (2), said mixing tool (2) comprising a knife (6; 106) fixed to the end of a drive shaft (3) passing through the bottom (10) of the working receptacle (1), **characterised in that** said mixing tool (2) is conform with one of claims 1 to 7.

9. Food preparation household electrical appliance according to claim 8, **characterised in that** the base (10) has a conical shape.
